# EUROPEAN PATENT APPLICATION

(11) **EP 4 424 644 A1**
(43) Date of publication of application: **04.09.2024**
(21) Application number: 24156962.3
(22) Date of filing: 09.02.2024
(51) Int. Cl.: C01G 53/00, H01M 4/00

(54) **CATHODE ACTIVE MATERIAL PRECURSOR FOR LITHIUM SECONDARY BATTERY, CATHODE ACTIVE MATERIAL FOR LITHIUM SECONDARY BATTERY AND LITHIUM SECONDARY BATTERY**

(30) Priority: 10.02.2023 KR 20230017995
(71) Applicant: SK On Co., Ltd., Seoul 03161 (KR); SK Innovation Co., Ltd., Seoul 03188 (KR)
(72) Inventor: YOO, Yeong Bin, 34124 Daejeon (KR); PARK, Sung Soon, 34124 Daejeon (KR); KIM, Jong Hwa, 34124 Daejeon (KR); YOO, Kyung Bin, 34124 Daejeon (KR); LEE, Ju Wook, 34124 Daejeon (KR)
(74) Representative: Stolmár & Partner Patentanwälte PartG mbB

(57) **Abstract**

A cathode active material precursor for a lithium secondary battery includes nickel and at least one metal except for nickel. The cathode active material precursor includes primary particles having a major axis length of 500 nm or less and an aspect ratio in a range from 1.0 to 3.0. A volume ratio of micropores having a pore diameter of 2 nm or less relative to a total pore volume is 1.4% or less.

## Description

### CROSS-REFERENCE TO RELATED APPLICATION AND CLAIM OF PRIORITY

This application claims priority to Korean Patent Application No. 10-2023-0017995 filed on February 10, 2023 in the Korean Intellectual Property Office (KIPO), the entire disclosure of which is incorporated by reference herein.

### BACKGROUND

### 1. Field

The present invention relates to a cathode active material precursor for a lithium secondary battery, a cathode active material for a lithium secondary battery and a lithium secondary battery. More particularly, the present invention relates to a cathode active material precursor for a lithium secondary battery containing nickel, a cathode active material for a lithium secondary battery containing lithium and nickel and a lithium secondary battery including the cathode active material.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source of an electric automobile, a hybrid vehicle, etc.

Examples of the secondary battery include, e.g., a lithium secondary battery, a nickelcadmium battery, a nickel-hydrogen battery, etc. The lithium secondary battery is widely developed due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape for accommodating the electrode assembly and the electrolyte.

To obtain a high capacity of the lithium secondary battery, a high-Ni-based lithium oxide having an increased nickel content is known as a cathode active material. The cathode active material may be prepared by reacting a nickel-containing precursor and a lithium source.

However, a side reaction may occur between the cathode active material and the electrolyte, and thus life-span properties of the lithium secondary battery may be degraded.

For example, when the cathode active material has primary particles of a square shape, anisotropic contraction and expansion may occur in a c-axis direction during charging and discharging, and fine cracks may be generated in secondary particles formed by agglomeration of the primary particles, thereby accelerating the side reaction with the electrolyte.

### SUMMARY

According to an aspect of the present invention, there is provided a cathode active material precursor for a lithium secondary battery providing improved life-span and capacity.

According to an aspect of the present invention, there is provided a cathode active material for a lithium secondary battery providing improved life-span and capacity.

According to an aspect of the present invention, there is provided a lithium secondary battery including the cathode active material.

According to an aspect of the present invention, there is provided a method of preparing a cathode active material for a lithium secondary battery providing improved life-span and capacity.

A cathode active material precursor for a lithium secondary battery according to embodiments of the present disclosure includes nickel and at least one metal except for nickel. The cathode active material precursor includes primary particles having a major axis length of 500 nm or less and an aspect ratio in a range from 1.0 to 3.0. A volume ratio of micropores having a pore diameter of 2 nm or less relative to a total pore volume is 1.4% or less.

In some embodiments, the at least one metal may include includes cobalt or manganese.

In some embodiments, the cathode active material precursor may have a structure represented by Chemical Formula 1.

NiₓCo_{y}Mn_{z}Mₖ(OH)₂₊ₐ ....... [Chemical Formula 1]

In Chemical Formula 1, M may include at least one selected from the group consisting of Fe, Na, Mg, Ca, Ti, V, Cr, Cu, Zn, Ge, Sr, Ag, Ba, Zr, Nb, Al, Mo, Ga, W, Y, La, Ta and B, 0.8≤x≤1.0, 0≤y≤0.2, 0≤z≤0.2, 0≤k≤0.2, x+y+z+k=1, and 0≤a≤ is 0.5.

In some embodiments, a molar ratio of nickel among elements excluding a hydroxyl group may be 0.88 or more.

In some embodiments, the cathode active material precursor may have a shape of a secondary particle in which the primary particles are aggregated.

In some embodiments, a ratio of the number of the primary particles having the major axis length of 500 nm or less and the aspect ratio of 1.0 to 3.0 is 70% or more based on the total number of primary particles included in the secondary particle.

In some embodiments, a volume ratio of mesopores having a pore diameter of more than 2 nm and less than 50 nm relative to the total pore volume may be in a range from 75 % to 90 %, and a volume ratio of macropores having a pore diameter of 50 nm or more relative to the total pore volume may be in a range from 5 % to 25 %,

In some embodiments, the total pore volume may be in a range from 0.02 cm³/g to 0.03 cm³/g.

In some embodiments, a specific surface area may be in a range from 7.0 m²/g to 12.0 m2/g.

A cathode active material for a lithium secondary battery obtained from the cathode active material precursor for a lithium secondary battery according to the above-described embodiments is provided.

In some embodiments, the cathode active material may have a structure represented by the Chemical Formula 2.

Li_{b}NiₓCo_{y}Mn_{z}MₖO₂₊ₐ ....... [Chemical Formula 2]

In Chemical Formula 2, 0.8≤x≤1.0, 0≤y≤0.2, 0≤z≤0.2, 0≤k≤0.2, x+y+z+k=1, 0≤a≤0.5, 0.9≤b≤1.2, and M may include at least one selected from the group consisting of Fe, Na, Mg, Ca, Ti, V, Cr, Cu, Zn, Ge, Sr, Ag, Ba, Zr, Nb, Al, Mo, Ga, W, Y, La, Ta and B.

In some embodiments, the cathode active material has a shape of a secondary particle in which a plurality of primary particles having an aspect ratio of 1.5 to 7 are aggregated.

A lithium secondary battery includes a cathode including a cathode active material layer that includes the cathode active material from a lithium secondary battery according to the above-described embodiments, and an anode facing the cathode.

In a method of preparing a cathode active material for a lithium secondary battery, the cathode active material precursor for a lithium secondary battery according to the above-described embodiments and a lithium source are mixed to form a mixture. The mixture is fired at a temperature in a range from 600°C to 900°C.

In some embodiments, at least one of salts containing Ni, Co, Mn, Fe, Na, Mg, Ca, Ti, V, Cr, Cu, Zn, Ge, Sr, Ag, Ba, Zr, Nb, Al, Mo, Ga, W, Y, La, Ta or B may be added in the mixing.

In the cathode active material prepared from the cathode active material precursor for a lithium secondary battery according to embodiments of the present disclosure, a length of a primary particle in a c-axis direction may become short, so that shrinkage and expansion in the c-axis direction may be suppressed. Additionally, micro-cracks of a secondary particle formed by agglomeration of the primary particle during charging and discharging may be reduced.

Accordingly, side reactions between the cathode active material and an electrolyte may be suppressed, so that life-span properties of the lithium secondary battery may be improved, and gas generation during high temperature storage may be reduced.

The cathode active material precursor may have desirable pore properties, and the life-span properties and capacity of a lithium secondary battery may be improved.

### BRIEF DESCRIPTION OF THE DRAWINGS

FIG. 1 is a scanning electron microscope (SEM) image of a cross-section of a cathode active material of Example 1.
FIG. 2 is an SEM image of a cross-section of a cathode active material of Comparative Example 1.
FIGS. 3 and 4 are a schematic plan view and a cross-sectional view, respectively, illustrating a lithium secondary battery in accordance with example embodiments.

### DETAILED DESCRIPTION OF THE EMBODIMENTS

According to example embodiments of the present invention, a cathode active material precursor for a lithium secondary battery having predetermined shape and pore properties is provided.

According to embodiments of the present invention, a cathode active material prepared using the cathode active material precursor, a method of preparing the cathode active material, and a lithium secondary battery including the cathode active material are also provided.

### <Cathode Active Material Precursor and Cathode Active Material for Lithium Secondary Battery>

In example embodiments, a cathode active material precursor for a lithium secondary battery (hereinafter, may be abbreviated as a cathode active material precursor) may be a nickel-based transition metal compound including nickel (Ni) and an additional transition metal.

For example, the additional transition metal may include cobalt (Co) or (Mn).

In some embodiments, the nickel-based transition metal compound may be a nickel composite hydroxide that may contain two or more transition metals including nickel.

In example embodiments, , Ni may be included in the largest content (molar ratio or atomic%) among elements except for a hydroxyl group in the cathode active material precursor.

For example, the content of Ni may be 0.8 or more, 0.84 or more, or 0.88 or more.

In some embodiments, the cathode active material precursor may have a structure by Chemical Formula 1 below.

[Chemical Formula 1] NiₓCo_{y}Mn_{z}Mₖ(OH)₂₊ₐ

In Chemical Formula 1, 0.8≤x≤1.0, 0≤y≤0.2, 0≤z≤0.2, 0≤k≤0.2, x+y+z+k=1, and 0≤a≤0.5. M may include at least one selected from Fe, Na, Mg, Ca, Ti, V, Cr, Cu, Zn, Ge, Sr, Ag, Ba, Zr, Nb, Al, Mo, Ga, W, Y, La, Ta, and B.

In example embodiments, the cathode active material precursor may include primary particles having a major axis length of 500 nm or less and an aspect ratio of 1.0 to 3.0. The cathode active material precursor may have a shape of a secondary particle.

For example, the major axis length of the primary particle may be in a range from 200 nm to 500 nm, from 200 nm to 400 nm, from 300 nm to 500 nm, or from 300 nm to 400 nm. For example, the primary particles may have an aspect ratio from 1 to 3, from 1 to 2.5, 1 to 2, or from 1 to 1.5.

The secondary particle may refer to a structure in which a plurality of the primary particles are aggregated to form a single particle. For example, one secondary particle may include 10 or more, 20 or more, 30 or more, 40 or more, 50 or more, 60 or more, or 100 or more primary particles.

For example, in a scanning electron microscope (SEM) cross-sectional image of the cathode active material layer, the agglomerated form of the primary particles within the boundary of one secondary particle can be observed.

The major axis length of the primary particle may refer to the largest length among lengths of straight lines penetrating two points of the corresponding particle in the SEM cross-sectional image. A minor short axis length of the primary particle may refer to the smallest length among lengths of straight lines penetrating two points of the corresponding particle in the SEM cross-sectional image.

The aspect ratio refers to a ratio of the major axis length to the minor axis length.

The major axis length, the minor axis length and the aspect ratio may be calculated as an average value of the predetermined number of primary particles (e.g., 10 or more, 20 or more, 30 or more) randomly selected from the SEM image.

Within the above range, the primary particles may have a rod-shaped structure having a short length in a c-axis direction in the cathode active material prepared using the cathode active material precursor. For example, contraction and expansion in the c-axis direction of the cathode active material may be prevented, and microcracks of the secondary particle formed by aggregation of the primary particles may be reduced during charging and discharging.

Accordingly, side reactions between the cathode active material and an electrolyte may be suppressed, life-span properties of the lithium secondary battery may be improved, and gas generation during high temperature storage may be reduced.

Anisotropic contraction and expansion in a c-axis direction may occur in the cathode active material prepared using the cathode active material precursor that may not within the above range, and micro-cracks may be generated in the secondary particle formed by agglomeration of the primary particles to accelerated the side reaction with the electrolyte solution.

In example embodiments, the cathode active material precursor may have a shape of the secondary particle in which the primary particles are aggregated.

In example embodiments, a ratio of the number of the primary particles having a major axis length of 500 nm or less and an aspect ratio of 1.0 to 3.0 among the total number of primary particles included in the secondary particle may be 70% or more. For example, the ratio of the number of the primary particles satisfying the major axis length and the aspect ratio in the above-described range may be 50% or more, 60% or more, 70% or more, 80% or more, or 90% or more.

In example embodiments, micropores having a pore diameter of 2 nm or less in the cathode active material precursor may be controlled in a predetermined volume ratio.

For example, the volume ratio of the micropores relative to a total pore volume in the cathode active material precursor may be 1.4% or less. In an embodiment, the volume ratio of the micropores relative to the total pore volume may be 1.0% or less, 0.5% or less, or 0.4% or less. In an embodiment, the volume ratio of the micropores may be 0.1% or more or 0.15% or more.

Within the above range, stability of the cathode active material prepared from the cathode active material precursor above may be improved. For example, the primary particles in the cathode active material may be radially aligned, and lithium ions may be efficiently diffused from a center to a surface of the particle.

Accordingly, the lithium ions may be easily transferred during charging and discharging, and initial charging and discharging efficiencies and rate properties of the cathode active material may be improved. Further, a capacity and a power of the lithium secondary battery may be increased.

For example, If the volume ratio of the micropores relative to the total pore volume is greater than 1.4% or less than 0.1%, uniformity of inner pore sizes of the cathode active material precursor may be lowered. For example, generation of cracks in the cathode active material precursor and the cathode active material may be accelerated, and a radial structure of the secondary particle in the cathode active material may not be stably maintained.

Accordingly, micro-cracks in the secondary particle may be increased during charging and discharging, and the side reaction between the cathode active material and the electrolyte may be accelerated.

In some embodiments, mesopores having a pore diameter of greater than 2 nm and less than 50 nm, and macropores having a pore diameter of 50 nm or more in the cathode active material precursor may be controlled in predetermined volume ratios.

In an embodiment, a volume ratio of the mesopores relative to the total pore volume may be in a range from 75% to 90%, from 80% to 85%, or from 81% to 84%.

In an embodiment, a volume ration of the macropores relative to the total pore volume may be in a range from 5% to 25%, from 10% and 20%, from 15% to 20%, or from 16% to 19%.

Within the above range, distribution of pores at an inside of the cathode active material precursor may become uniform, and cracks in the precursor may be prevented. For example, the primary particles in the cathode active material may be radially aligned and a space suitable for a growth of the primary particles may be achieved, so that cracks in the cathode active material may be avoided or reduced. Accordingly, the capacity and life-span properties of the lithium secondary battery may be improved.

In some embodiments, a total pore volume of the cathode active material precursor may be controlled within a predetermined range. For example, the total pore volume may be in a range from 0.02 cm³/g to 0.03 cm³/g, from 0.025 cm³/g to 0.03 cm³/g, or from 0.028 cm³/g to 0.03 cm³/g.

Within the above range, even when the cathode active material precursor above has a high-nickel composition, an appropriate amount of pores may be obtained to suppress the generation of cracks in the precursor and the cathode active material. Accordingly, the side reaction between the cathode active material and the electrolyte may be suppressed, and thus life-span properties of the lithium secondary battery may be improved.

For example, if the total pore volume is greater than 0.03 cm³/g, pores may be increased in the cathode active material precursor and cracks may be easily generated in the precursor and the cathode active material, thereby degrading the life-span of the lithium secondary battery.

For example, if the total pore volume is less than 0.02 cm³/g, the cracks may be increased due to an insufficient inner space in the cathode active material formed by a calcination of the cathode active material precursor. Accordingly, the electrolyte may penetrate into the cathode active material, thereby increasing the side reaction and increasing an amount of gas generated and a consumption rate of the electrolyte.

In some embodiments, a specific surface area of the cathode active material precursor may be controlled to a specific range. For example, the specific surface area may be in a range from 7.0 m²/g to 12.0 m²/g, from 7.0 m²/g to 10.0 m²/g, from 7.0 m²/g to 9.5 m²/g, or from 7.5 m²/g to 9.5 m²/g.

Within the above range, the pore distribution of the cathode active material precursor may become more uniform, and the sufficient inner space within the cathode active material may be obtained. Thus, the generation of cracks in the precursor and the cathode active material may be suppressed, and the capacity and life-span properties of the lithium secondary battery may be improved.

Hereinafter, a method of preparing the cathode active material precursor according to example embodiments will be described.

In example embodiments, active material metal sources may be prepared. The active material metal sources may include a nickel source, a manganese source and a cobalt source.

Examples of the nickel source include nickel sulfate (NiSO₄), nickel hydroxide (Ni(OH)₂), nickel nitrate (Ni(NO₃)₂), nickel acetate (Ni(CH₃CO₂)₂), a hydrate thereof, etc.

Examples of the manganese source include manganese sulfate (MnSO₄), manganese hydroxide (Mn(OH)₂), manganese nitrate (Mn(NO₃)₂), manganese acetate (Mn(CH₃CO₂)₂, a hydrate thereof, etc.

Examples of the cobalt source include cobalt sulfate (CoSO₄), cobalt hydroxide (Co(OH)₂), cobalt nitrate (Co(NO₃)₂), cobalt carbonate (CoCO₃), a hydrate thereof.

In some embodiments, nickel sulfate, manganese sulfate and cobalt sulfate may be used as the nickel source, the manganese source and the cobalt source, respectively.

In some embodiments, a compound including Fe, Na, Mg, Ca, Ti, V, Cr, Cu, Zn, Ge, Sr, Ag, Ba, Zr, Nb, Al, Mo, Ga, W, Y, La, Ta or B as an element represented by M in Chemical Formula 1 may be used together. For example, the compound may include a salt (e.g., a carbonate, etc.), a hydroxide or an oxide of the element.

M may be present by substituting a portion of Ni, Co and Mn in a precursor particle as a dopant of the cathode active material precursor, or may be present on a surface of the active material particle as a surface coating material.

For example, a transition metal solution including the above-described active material metal sources may be formed. In exemplary embodiments, when preparing the transition metal solution, a pH may be adjusted in a range from 10 to 12, or from 11 to 12 using sodium hydroxide (NaOH). The above-described pH range may be controlled by adjusting a concentration of the sodium hydroxide solution or by adjusting an input amount of a sodium hydroxide solution.

Within the pH range, the total pore volume and the volume ratio of the micropores of the cathode active material precursor may be easily adjusted. Additionally, even when the cathode active material precursor has a high-nickel composition (Ni 88% or more), the primary particles may satisfy the above-described conditions of the major axis length and the aspect ratio.

For example, if the pH exceeds 12, plate-shaped primary particles may be formed. Further, both the major axis length and the minor axis length may be increased, and the aspect ratio of the primary particles may be decreased.

For example, if the pH is less than 10, a formation rate of the cathode active material precursor may become low, and nickel may remain in a filtrate. Accordingly, the composition of the cathode active material precursor may become different from the structure represented by Chemical Formula 1.

In example embodiments, an active material precursor may be obtained by mixing the above-described active material metal sources and reacting by, e.g., a co-precipitation method. For example, the active material precursor may be prepared in the form of nickel-manganese-cobalt hydroxide.

A precipitating agent and/or a chelating agent may be used to promote the co-precipitation reaction. The precipitating agent may include an alkaline compound such as sodium hydroxide (NaOH), sodium carbonate (Na₂CO₃), etc. The chelating agent may include, e.g., aqueous ammonia (e.g., NH₃H₂O), ammonium carbonate (e.g., NH₃HCO₃), etc.

In some embodiments, a ratio of a molar concentration of the chelating agent to a molar concentration of the transition metal solution may be in a range from 0.5 to 1.5, or from 0.8 to 1.2. Within the above range, the primary particles included in the cathode active material precursor may be grown to satisfy the above-described major axis length and aspect ratio, so that the precursor may satisfy the total pore volume, the volume ratio of the micropores, and the specific surface area within the above-described range.

In some embodiments, a temperature of the co-precipitation reaction may be greater than 50°C and less than 80°C. For example, the temperature of the co-precipitation reaction may be in a range from 55°C to 75°C, or from 65°C to 75°C. Within the above range, since primary particles included in the anode active material precursor may be properly grown while suppressing the cracks of the precursor and enhancing crystallinity of the precursor.

In some examples, the co-precipitation reaction may be performed for 30 hours to 80 hours. Within the above range, the primary particles contained in the cathode active material precursor may be sufficiently grown.

In some examples, a precipitated product may be heat-treated to obtain the cathode active material precursor. For example, the cathode active material precursor may be formed by the heat-treatment at a temperature from about 100°C to 150°C for 10 to 30 hours. For example, the heat-treatment temperature may be in a range from about 100°C to 130°C, and may be performed for 10 hours to 20 hours.

In example embodiments, a cathode active material for a lithium secondary battery (hereinafter, abbreviated as a cathode active material) prepared using the cathode active material precursor is provided.

The cathode active material may include a lithium-nickel-based metal oxide. As described above, the cathode active material may further contain cobalt and manganese. For example, the cathode active material may include a nickel-cobalt-manganese (NCM)-based lithium oxide.

As described above, Ni may be included in the largest content (molar ratio or atomic%) among elements other than lithium and oxygen included in the cathode active material.

For example, the content of Ni may be 0.8 or more, 0.84 or more, or 0.88 or more.

In some embodiments, the cathode active material may include a lithium-nickel-based metal oxide having a structure represented by Chemical Formula 2.

[Chemical Formula 2] Li_{b}NiₓCo_{y}Mn_{z}MₖO₂₊ₐ

In Chemical Formula 2, 0.8≤x≤1.0, 0≤y≤0.2, 0≤z≤0.2, 0≤k≤0.2, x+y+z+k=1, 0≤a≤0.5, and 0.9≤b≤1.2. M may include at least one selected from Fe, Na, Mg, Ca, Ti, V, Cr, Cu, Zn, Ge, Sr, Ag, Ba, Zr, Nb, Al, Mo, Ga, W, Y, La, Ta, and B.

In some embodiments, the cathode active material may have the form of a secondary particle in which a plurality of primary particles having an aspect ratio of 1.5 to 7 are aggregated therein. For example, the aspect ratio may be in a range from 2 to 6, from 2.5 to 5, from 2.5 to 4, or from 2.5 to 3.5.

Within the above range, contraction and expansion of the cathode active material in the c-axis direction may be suppressed, and micro-cracks of the secondary particles during charging and discharging may be reduced so that the side reaction between the cathode active material and the electrolyte may be suppressed. Accordingly, the life-span properties of the lithium secondary battery may be improved, and gas generation during a high-temperature storage may be reduced.

In example embodiments, a mixture of the cathode active material precursor for a lithium secondary battery and a lithium source may be prepared. The mixture may be fired at a temperature of 600°C to 900°C to prepare the cathode active material for a lithium secondary battery.

The lithium source may include, e.g., lithium carbonate (Li₂CO₃), lithium nitrate (LiNO₃), lithium acetate (CH₃COOLi), lithium oxide (Li₂O), lithium hydroxide (LiOH), etc. These may be used alone or in a combination of two or more therefrom. For example, lithium hydroxide may be used as the lithium source.

In some embodiments, when the cathode active material precursor is mixed and reacted with the lithium source and reacted, at least one of compounds including Ni, Co, Mn, Fe, Na, Mg, Ca, Ti, V, Cr, Cu, Zn, Ge, Sr, Ag, Ba, Zr, Nb, Al, Mo, Ga, W, Y, La, Ta and/or B may be added. Accordingly, the cathode active material may include the above-described lithium-nickel-based metal oxide also including other elements (dopants) .

For example, the cathode active material precursor above may be mixed with the lithium source, and then fired to form lithium-nickel metal oxide particles as the cathode active material. For example, a temperature of the firing may be in a range from 600°C to 900°C, or from 600°C to 850°C.

In some embodiments, a cleaning process may be further performed on the prepared on the lithium-nickel metal oxide particles. The cleaning process may include washing with an aqueous or organic solvent. Through the cleaning process, lithium impurities (e.g., Li₂O, Li₂CO₃, etc.) remaining on a surface of the lithium-nickel metal oxide particles may be removed.

In an embodiment, after the washing process, a heat-treatment may be further performed. The heat-treatment may be performed, e.g., at a temperature ranging from about 250 °C to 600 °C. A damaged surface of the cathode active material during the washing process may be recovered, and crystallinity may be enhanced by the heat-treatment.

### <Lithium Secondary Battery>

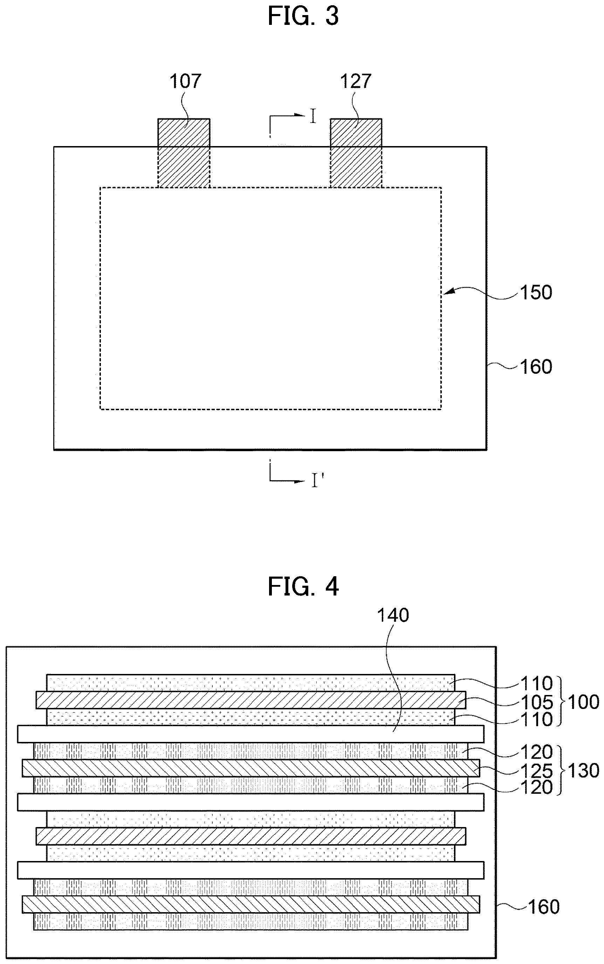

FIGS. 3 and 4 are a schematic plan view and a cross-sectional view, respectively, illustrating a lithium secondary battery in accordance with exemplary embodiments. FIG. 4 is a cross-sectional view taken along a line-I-I' of FIG. 3 in a thickness direction.

Referring to FIGS. 3 and 4, the lithium secondary battery may include a cathode 100 including a cathode active material layer that includes the above-described cathode active material for a lithium secondary battery, and an anode 130 facing the cathode.

The cathode 100 may include a cathode active material layer 110 formed by coating the cathode active material on a cathode current collector 105.

For example, a slurry may be prepared by mixing and stirring the above-described cathode active material with a binder, a conductive material and/or a dispersive agent in a solvent. The slurry may be coated on the cathode current collector 105, and then dried and pressed to from the cathode.

The cathode current collector 105 may include stainless-steel, nickel, aluminum, titanium, copper or an alloy thereof, e.g., may include aluminum or an aluminum alloy.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer 110 may be reduced, and an amount of the cathode active material may be relatively increased. Thus, capacity and power of the lithium secondary battery may be further improved.

The conductive material may be added to facilitate electron mobility between active material particles. For example, the conductive material may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃, etc.

The anode 130 may include an anode current collector 125 and an anode active material layer 120 formed by coating an anode active material on a surface of the anode current collector 125.

The anode active material may include a material commonly used in the related art which may be capable of adsorbing and ejecting lithium ions. For example, a carbon-based material such as a crystalline carbon, an amorphous carbon, a carbon complex or a carbon fiber, a lithium alloy, a silicon (Si)-based compound, tin, etc., may be used.

The amorphous carbon may include a hard carbon, cokes, a mesocarbon microbead (MCMB), a mesophase pitch-based carbon fiber (MPCF), etc.

The crystalline carbon may include a graphite-based material such as natural graphite, graphitized cokes, graphitized MCMB, graphitized MPCF, etc. The lithium alloy may further include aluminum, zinc, bismuth, cadmium, antimony, silicon, lead, tin, gallium, indium, etc.

The silicon-based compound may include, e.g., silicon, silicon oxide (e.g., SiOx, 0<x<2), or a silicon-carbon composite compound such as silicon carbide (SiC).

The anode current collector 125 may include, e.g., gold, stainless steel, nickel, aluminum, titanium, copper or an alloy thereof, e.g., may include copper or a copper alloy.

In some embodiments, a slurry may be prepared by mixing and stirring the anode active material with a binder, a conductive material and/or a dispersive agent in a solvent. The slurry may be coated on the anode current collector, and then dried and pressed to form the anode 130.

The binder and the conductive material substantially the same as or similar to those mentioned above may also be used in the anode 130. In some embodiments, the binder for forming the anode 130 may include an aqueous binder such as styrene-butadiene rubber (SBR), and carboxymethyl cellulose (CMC) may also be used as a thickener.

The separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, etc. The separation layer 140 may also include a non-woven fabric formed from a glass fiber with a high melting point, a polyethylene terephthalate fiber, or the like.

In example embodiments, an electrode cell may be defined by the cathode 100, the anode 130 and the separation layer 140, and a plurality of the electrode cells may be stacked to form an electrode assembly 150 that may have e.g., a jelly roll shape. For example, the electrode assembly 150 may be formed by winding, stacking or folding of the separation layer 140.

The electrode assembly 150 may be accommodated together with an electrolyte in a case 160 to define the lithium secondary battery. In example embodiments, a non-aqueous electrolyte may be used as the electrolyte.

The non-aqueous electrolyte may include a lithium salt and an organic solvent. The lithium salt may be represented by Li⁺X⁻ , and an anion of the lithium salt X' may include, e.g., F, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination of two or more therefrom.

As illustrated in FIG. 3, electrode tabs (a cathode tab and an anode tab) may protrude from the cathode current collector 105 and the anode current collector 125, respectively, included in each electrode cell to one side of the case 160. The electrode tabs may be welded together with the one side of the case 160 to be connected to an electrode lead (a cathode lead 107 and an anode lead 127) that may be extended or exposed to an outside of the case 160.

The lithium secondary battery may be manufactured in, e.g., a cylindrical shape using a can, a prismatic shape, a pouch shape or a coin shape.

According to embodiments of the present disclosure, the lithium secondary battery may have improved life-span and capacity by including the lithium-nickel metal oxide particles including nickel in a high content and having the shape of the secondary particle in which the above-described primary particles are agglomerated therein.

Hereinafter, Examples and Comparative Examples are provided to more concretely describe the present invention. However, the following Examples are only given for illustrating the present disclosure are not to be interpreted to limit the scope and spirit of the present disclosure.

### Example 1

### (1) Preparation of cathode active material precursor

At a temperature of 70°C, 25 wt% of a sodium hydroxide (NaOH) aqueous solution and 28 wt% of ammonia water were added to a reactor so that pH was 12.0, and the solution in the reactor was bubbled with nitrogen (N₂) gas while being stirred at a specific rate to remove dissolved oxygen and create a non-oxidizing atmosphere in the reactor.

NiSO₄, CoSO₄ and MnSO₄ were mixed in distilled water with a composition of 94:3:3 (a molar ratio of Ni:Co:Mn) to prepare a transition metal aqueous solution. The transition metal aqueous solution was introduced into the reactor so that a ratio of a molar concentration of ammonia water to a molar concentration of the transition metal aqueous solution became 1.2 , and a co-precipitation reaction was performed for 48 hours to prepare a cathode active material precursor. A pH of the solution in the reactor was maintained in a range from 11.0 to 12.0.

Thereafter, the obtained cathode active material precursor was washed and filtered, and then dried in an oven at 120°C for 12 hours to obtain a cathode active material precursor having a particle size (D₅₀) of about 11 µm.

### (2) Fabrication of cathode active material

The obtained cathode active material precursor was mixed with lithium hydroxide in a molar ratio of 1:1.02, heated to 680°C at a ramping rate of 2°C/min, and oxygen was passed through at 680°C for 10 hours at a rate of 20 L/min to be fired in a firing furnace in which an oxygen atmosphere was maintained. The fired product was naturally cooled to room temperature, and a lithium metal oxide (LiNi_{0.94}Co_{0.03}Mn_{0.03}O₂) was obtained through pulverizing, washing and post-firing at 300°C.

### (3) Fabrication of lithium secondary battery

A secondary battery was manufactured using the obtained cathode active material. Specifically, the cathode active material, Denka Black as a conductive material and PVDF as a binder were mixed in a mass ratio of 93:5:2 to form a cathode slurry. The cathode slurry was coated on an aluminum current collector (thickness: 20 µm), vacuum dried at 100°C, and then pressed to prepare a cathode.

### A 1.2 mm-thick lithium metal was used as the anode.

The cathode and the anode prepared as described above were notched and stacked in circular shapes having diameters of Φ14 and Φ16, respectively, and a separator (polyethylene, thickness: 13 µm) notched by a size of Φ19 was disposed between the cathode and the anode to form an electrode cell. The electrode cell was put into a coin cell exterior material having a diameter of 20 mm and a height of 1.6 mm, an electrolyte was injected and assembled, and aged for 12 hours or more so that the electrolyte impregnated the electrode. A 1M LiPF₆ solution a mixed solvent of EC/EMC (30/70; volume ratio) was used as the electrolyte.

A formation charge/discharge was performed for the secondary battery manufactured as described above (charge condition CC-CV 0.1C 4.3V 0.005C CUT-OFF, discharge condition CC 0.1C 3V CUT-OFF).

### Example 2

A precursor, an active material and a secondary battery were prepared by the same methods as those in Example 1, except that the ratio of the molar concentration of ammonia water to the molar concentration of the transition metal aqueous solution was 1.0 when preparing the cathode active material precursor.

### Example 3

A precursor, an active material and a secondary battery were prepared by the same methods as those in Example 1, except that the ratio of the molar concentration of ammonia water to the molar concentration of the transition metal aqueous solution was 0.8 when preparing the cathode active material precursor, an input rate of the transition metal aqueous solution was lowered to a 80% level compared to that in Example 1, and a time for the co-precipitation reaction was changed to 60 hours.

### Comparative Example 1

A precursor, an active material and a secondary battery were prepared by the same methods as those in Example 1, except that the ratio of the molar concentration of ammonia water to the molar concentration of the transition metal aqueous solution was 2.0 when preparing the cathode active material precursor and the solution in the reactor was maintained at pH in a range from 10.5 to 11.5.

### Comparative Example 2

A precursor, an active material and a secondary battery were prepared by the same methods as those in Comparative Example 1, except that the ratio of the molar concentration of ammonia water to the molar concentration of the transition metal aqueous solution was 1.5 when preparing the cathode active material precursor.

### Comparative Example 3

A precursor, an active material and a secondary battery were prepared by the same methods as those in Example 1, except that the ratio of the molar concentration of ammonia water to the molar concentration of the transition metal aqueous solution was 0.3 when preparing the cathode active material precursor.

### Comparative Example 4

A precursor, an active material and a secondary battery were prepared by the same methods as those in Example 1, except that the ratio of the molar concentration of ammonia water to the molar concentration of the transition metal aqueous solution was 0.5 when preparing the cathode active material precursor and the solution in the reactor was maintained at pH in a range from 10.5 to 11.5.

### Comparative Example 5

A precursor, an active material and a secondary battery were prepared by the same methods as those in Comparative Example 4, except that the temperature condition was changed to 80°C when preparing the cathode active material precursor.

### Comparative Example 6

A precursor, an active material and a secondary battery were prepared by the same methods as those in Example 2, except that the temperature condition was changed to 80°C when preparing the cathode active material precursor.

### Experimental Example 1

### (1) Cross-sectional analysis of cathode active material precursor and cathode active material

Cross-sectional images of the cathode active material precursor particles and the cathode active material according to Examples and Comparative Examples were obtained using a Scanning Electron Microscope (SEM) (Thermo Fisher, manufactured by Helios Nanolab 650).

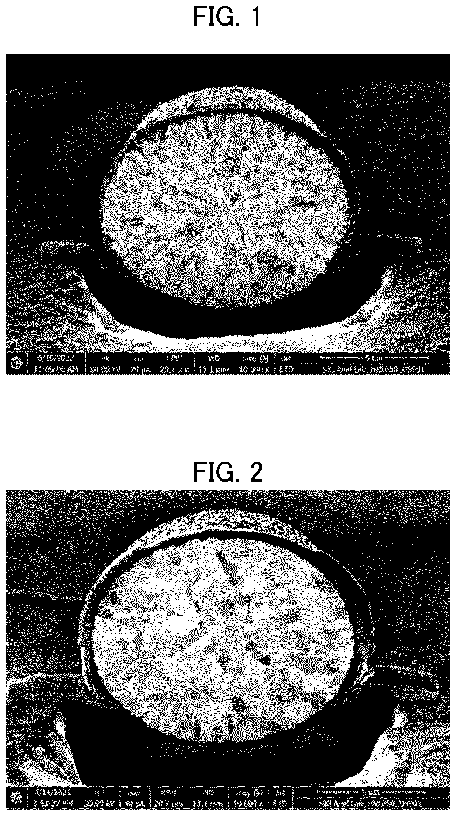

FIG. 1 is an SEM image of a cross-section of a cathode active material of Example 1. FIG. 2 is an SEM image of a cross-section of a cathode active material of Comparative Example 1.

Referring to FIG. 1, the cathode active material prepared using the cathode active material precursor of Example 1 had a secondary particle structure in which primary particles being aligned radially and having an aspect ratio of 1.5 to 7 were agglomerated.

Referring to FIG. 2, the cathode active material prepared by using the cathode active material precursor of Comparative Example 1 had a secondary particle structure in which square-type primary particles without an orientation were agglomerated.

From the results measured from the SEM images, major axis lengths, minor axis lengths and aspect ratios of the primary particles included in the cathode active material precursor according to Examples and Comparative Examples, and aspect ratios of the primary particles included in the cathode active material according to Examples and Comparative Examples are shown in Table 1 below. The aspect ratio was calculated as an average value of aspect ratios (major axis/minor axis) of 30 primary particles randomly selected in the SEM image.

**[Table 1]**

| | major axis length of primary particle in cathode active material precursor (nm) | minor axis length of primary particle in cathode active material precursor (nm) | aspect ratio of primary particle in cathode active material precursor | aspect ratio of primary particle in cathode active material |
|---|---|---|---|---|
| Example 1 | 344 | 264 | 1.31 | 3.98 |
| Example 2 | 362 | 270 | 1.34 | 3.31 |
| Example 3 | 387 | 280 | 1.38 | 2.89 |
| Comparative Example 1 | 789 | 240 | 3.29 | 1.41 |
| Comparative Example 2 | 630 | 203 | 3.13 | 2.01 |
| Comparative Example 3 | 302 | 208 | 1.45 | 4.05 |
| Comparative Example 4 | 359 | 254 | 1.41 | 4.32 |
| Comparative Example 5 | 428 | 213 | 2.01 | 4.22 |
| Comparative Example 6 | 479 | 283 | 1.69 | 3.73 |

### (2) BET(Brunauer, Emmett, Teller) analysis

Total pore volumes, volumes and volume ratios by pore sizes and specific surface areas of the cathode active material precursor particles according to Examples and Comparative Examples were measured using a BET meter (ASAP24200, Micromeritics). Specifically, nitrogen was used as an adsorption gas and helium was used as a carrier gas, and a 5-point predefined points method of a relative BET pressure by a continuous flow method was used.

### 1) Measurement of total pore volume, and volume ratios of micropores mesopores, and macropores

The total pore volume and the distribution (volume ratio) of micropores, mesopores and macropores were measured using nitrogen gas adsorption at a temperature of 77 K through a t-plot method according to ISO 15901-2 and ISO 15901-3 standards. The 3-Flex Adsorption Analyzer (Micromeritics Instrument Corporation) was used.

### 2) Measurement of specific surface area

The specific surface area was calculated as a surface area per unit mass by measuring a physical adsorption of gas molecules onto a solid surface according to ISO 9277 standard using a 3-Flex Adsorption Analyzer system.

The results are shown in Table 2 and Table 3.

**[Table 2]**

| | micropore | | mesopore | | macropore | |
|---|---|---|---|---|---|---|
| | volume (cm³/g) | volume ratio (%) | volume (cm³/g) | volume ratio (%) | volume (cm³/g) | volume ratio (%) |
| Example 1 | 0.000026 | 0.11 | 0.0212 | 84.72 | 0.0038 | 15.18 |
| Example 2 | 0.000043 | 0.16 | 0.0220 | 83.46 | 0.0043 | 16.38 |
| Example 3 | 0.000107 | 0.38 | 0.0230 | 81.45 | 0.0052 | 18.17 |
| Comparative Example 1 | 0.000486 | 2.91 | 0.0149 | 89.10 | 0.0013 | 8.00 |
| Comparative Example 2 | 0.000409 | 2.17 | 0.0175 | 92.82 | 0.0009 | 5.01 |
| Comparative Example 3 | 0.000461 | 1.49 | 0.0295 | 95.51 | 0.0009 | 3.00 |
| Comparative Example 4 | 0.000588 | 1.86 | 0.0291 | 91.77 | 0.0020 | 6.38 |
| Comparative Example 5 | 0.000594 | 1.55 | 0.0342 | 89.04 | 0.0036 | 9.41 |
| Comparative Example 6 | 0.000392 | 1.60 | 0.0220 | 90.03 | 0.0020 | 8.37 |

**[Table 3]**

| | specific surface area (m²/g) | total pore volume (cm³/g) |
|---|---|---|
| Example 1 | 7.6 | 0.0256 |
| Example 2 | 8.7 | 0.0271 |
| Example 3 | 9.4 | 0.0293 |
| Comparative Example 1 | 9.5 | 0.0170 |
| Comparative Example 2 | 11.5 | 0.0196 |
| Comparative Example 3 | 14.0 | 0.0320 |
| Comparative Example 4 | 14.9 | 0.0330 |
| Comparative Example 5 | 16.5 | 0.0398 |
| Comparative Example 6 | 11.7 | 0.0253 |

### Experimental Example 2

### (1) Evaluation on initial capacity and initial capacity efficiency

Each lithium secondary battery according to Examples and Comparative Examples wase charged (CC-CV 0.1C 4.3V CUT-OFF) in a chamber at 25°C, and then the battery was discharged (CC 0.1C 3.0V CUT-OFF), and a battery capacity (an initial discharge capacity) was measured after discharging again.

An initial capacity efficiency was evaluated as a percentage of the measured initial discharge relative to the measured initial charge capacity

### (2) Measurement of capacity retention (life-span property) during repeated charging and discharging

Each lithium secondary batteries according to Examples and Comparative Examples was repeatedly charged (CC/CV 0.5C 4.3V CUT-OFF) and discharged (CC 1.0C 3.0V CUT-OFF) at 45°C for 100 cycles to evaluate a capacity retention as a percentage of a discharge capacity at the 100th cycle relative to a discharge capacity at the 1st cycle.

The results are shown in Table 4.

**[Table 4]**

| | initial charge capacity (mAh/g) | initial discharge capacity (mAh/g) | initial capacity efficiency (%) | capacity retention 45°C (%) @100cycle |
|---|---|---|---|---|
| Example 1 | 243.8 | 225.2 | 92.4 | 83 |
| Example 2 | 243.8 | 226.0 | 92.7 | 86 |
| Example 3 | 243.0 | 226.5 | 93.2 | 86 |
| Comparative Example 1 | 246.0 | 213.6 | 86.8 | 63 |
| Comparative Example 2 | 243.9 | 216.6 | 88.8 | 58 |
| Comparative Example 3 | 243.7 | 227.1 | 93.2 | 71 |
| Comparative Example 4 | 245.8 | 228.2 | 92.9 | 68 |
| Comparative Example 5 | 246.6 | 229.5 | 93.1 | 58 |
| Comparative Example 6 | 246.4 | 222.6 | 90.3 | 80 |

Referring to Table 4, in the secondary battery including the cathode active material formed from the precursor of Examples, the initial capacity efficiency and the capacity retention were improved compared to those from the secondary batteries including the cathode active material formed from the precursor of Comparative Examples.

## Claims

1. A cathode active material precursor for a lithium secondary battery including nickel and at least one metal except for nickel,
wherein the cathode active material precursor comprises primary particles having a major axis length of 500 nm or less and an aspect ratio in a range from 1.0 to 3.0, and
a volume ratio of micropores having a pore diameter of 2 nm or less relative to a total pore volume is 1.4% or less.

2. The cathode active material precursor for a lithium secondary battery according to claim 1, wherein the at least one metal includes cobalt or manganese.

3. The cathode active material precursor for a lithium secondary battery according to claim 1 or claim 2, wherein the cathode active material precursor has a structure represented by Chemical Formula 1:
NiₓCo_{y}Mn_{z}Mₖ(OH)₂₊ₐ ....... [Chemical Formula 1]
wherein, in Chemical Formula 1, M includes at least one selected from the group consisting of Fe, Na, Mg, Ca, Ti, V, Cr, Cu, Zn, Ge, Sr, Ag, Ba, Zr, Nb, Al, Mo, Ga, W, Y, La, Ta and B, 0.8≤x≤1.0, 0≤y≤0.2, 0≤z≤0.2, 0≤k≤0.2, x+y+z+k=1, and 0≤a≤ is 0.5.

4. The cathode active material precursor for a lithium secondary battery according to claim 3, wherein a molar ratio of nickel among elements excluding a hydroxyl group is 0.88 or more.

5. The cathode active material precursor for a lithium secondary battery according to any one of claims 1 to 4, wherein the cathode active material precursor has a shape of a secondary particle in which the primary particles are aggregated.

6. The cathode active material precursor for a lithium secondary battery according to claim 5, wherein, a ratio of the number of the primary particles having the major axis length of 500 nm or less and the aspect ratio of 1.0 to 3.0 is 70% or more based on the total number of primary particles included in the secondary particle.

7. The cathode active material precursor for a lithium secondary battery according to any one of claims 1 to 6, wherein a volume ratio of mesopores having a pore diameter of more than 2 nm and less than 50 nm relative to the total pore volume is in a range from 75 % to 90 %, and a volume ratio of macropores having a pore diameter of 50 nm or more relative to the total pore volume is in a range from 5 % to 25 %.

8. The cathode active material precursor for a lithium secondary battery according to any one of claims 1 to 7, wherein the total pore volume is in a range from 0.02 cm³/g to 0.03 cm³/g.

9. The cathode active material precursor for a lithium secondary battery according to any one of claims 1 to 8, wherein a specific surface area is in a range from 7.0 m²/g to 12.0 m²/g.

10. A cathode active material for a lithium secondary battery obtained from the cathode active material precursor for a lithium secondary battery of any one of claims 1 to 9.

11. The cathode active material for a lithium secondary battery according to claim 10, wherein the cathode active material has a structure represented by the Chemical Formula 2:
Li_{b}NiₓCo_{y}Mn_{z}MₖO₂₊ₐ ....... [Chemical Formula 2]
wherein, in Chemical Formula 2, 0.8≤x≤1.0, 0≤y≤0.2, 0≤z≤0.2, 0≤k≤0.2, x+y+z+k=1, 0≤a≤0.5, 0.9≤b≤1.2, and M includes at least one selected from the group consisting of Fe, Na, Mg, Ca, Ti, V, Cr, Cu, Zn, Ge, Sr, Ag, Ba, Zr, Nb, Al, Mo, Ga, W, Y, La, Ta and B.

12. The cathode active material for a lithium secondary battery according to claim 10 or claim 11, wherein the cathode active material has a shape of a secondary particle in which a plurality of primary particles having an aspect ratio of 1.5 to 7 are aggregated.

13. A lithium secondary battery, comprising:
a cathode comprising a cathode active material layer that includes the cathode active material from a lithium secondary battery according to any one of claims 10 to 12; and
an anode facing the cathode.

14. A method of preparing a cathode active material for a lithium secondary battery, comprising:
mixing the cathode active material precursor for a lithium secondary battery of any one of claims 1 to 9 and a lithium source to form a mixture; and
firing the mixture at a temperature in a range from 600°C to 900°C.

15. The method of claim 14, wherein the mixing comprising adding at least one of salts containing Ni, Co, Mn, Fe, Na, Mg, Ca, Ti, V, Cr, Cu, Zn, Ge, Sr, Ag, Ba, Zr, Nb, Al, Mo, Ga, W, Y, La, Ta or B.
